# EUROPEAN PATENT APPLICATION

(11) **EP 0 740 065 A1**
(43) Date of publication of application: **30.10.1996**
(21) Application number: 96201022.9
(22) Date of filing: 16.04.1996
(51) Int. Cl.: F02M 25/07, F02B 33/44, F02B 37/02

(54) **Piston combustion engine having a system for recirculating exhaust gases and system for use in such an engine**

(30) Priority: 25.04.1995 NL 1000211
(71) Applicant: DAF TRUCKS N.V., 5643 TW Eindhoven (NL)
(72) Inventor: De Jong, Jan, 5591 AB Heeze (NL)
(74) Representative: Timmermans, Anthonius C.Th., Ir.

(57) **Abstract**

In order to reduce the emission of harmful substances, in particular NOx, a system of exhaust gas recirculation (EGR) is used in piston combustion engines.

A positive pressure difference between the exhaust and inlet volumes is needed in order to displace the exhaust gas.

The invention provides a piston combustion engine including an EGR turbine (17) connected to a first portion of the exhaust manifold (5) and an EGR compressor (21) connected to a second portion of the exhaust manifold (5). As a result of this a balanced gas exchange in the exhaust portions of the engine is obtained.

## Description

The invention relates to a piston combustion engine having a system for recirculating exhaust gases, said system comprising an exhaust manifold, a turbine connected to said exhaust manifold, and an inlet system comprising a compressor, which compressor compresses outside air being supplied and delivers said air to air supply means as well as means for admixing exhaust gases.

A piston combustion engine of this type is generally known. The recirculation of exhaust gases of a piston combustion engine to the air inlet, where said gases are mixed with the inlet air, is carried out in order to reduce the emission of harmful substances, in particular NOx. Exhaust gas recirculation is indicated by the abbreviation EGR.

One of the known systems concerns the recirculation of exhaust gas with a combustion engine provided with a so-called supercharging group. The exhaust gases are thereby taken from one or more volumes present between the exhaust valve(s) and the turbine(s), and they are recirculated to the inlet volume after the compressor(s).

The displacement of the exhaust gas requires a positive pressure difference between the exhaust volume and the inlet volume.

In order to enable the displacement of exhaust gas yet, it is known, for example from German Patent Application DE-A-4319380, to obtain the required pressure difference by means of a venturi.

A drawback of the known systems is the fact that in the case of a negative pressure difference the exhaust gas cannot be transported or only in a limited quantity.

Another drawback of the known systems is the fact that a relatively great deal of energy is lost.

The object of the invention is inter alia to provide a system which does not have the above drawbacks. In order to accomplish that objective a system according to the invention is characterized in that said system includes a second turbine, which second turbine is connected to a first (portion of the) exhaust manifold, as well as a second compressor, which second compressor is connected to a second (portion of the) exhaust manifold with an inlet and to the air supply means with an outlet.

The transport is realized by increasing the pressure of the exhaust gas by means of the second compressor (the EGR compressor) after said gas has been taken from the second (portion of the) exhaust manifold. Said compressor is driven by the second turbine (the EGR turbine) which is directly connected thereto. The exhaust gas which flows through said turbine is taken from the first portion of the exhaust manifold.

By connecting the EGR turbine to the first (portion of the) exhaust manifold and connecting the EGR compressor to the second (portion of the) exhaust manifold, a balanced gas exchange in the exhaust portions of the motor in question is obtained.

At the same time the operation of the normal exhaust gas turbine(s) is disturbed as little as possible.

One embodiment of a system according to the invention is characterized in that the second turbine is provided with at least one control valve.

Another embodiment of a system according to the invention is characterized in that said second compressor is provided with at least one control valve.

Another embodiment of a system according to the invention is characterized in that the air passed through said second compressor is cooled before and/or after said second compressor.

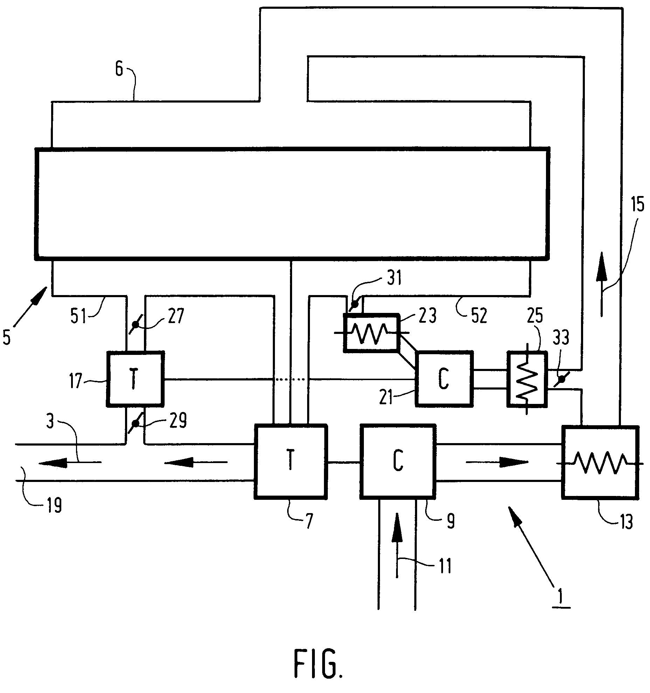

The invention will be explained in more detail hereafter by way of example, with reference to the Figure.

The Figure shows a schematic embodiment of a system according to the invention.

The Figure shows a piston combustion engine 1 having a system for recirculating exhaust gases 3 in a piston combustion engine. An exhaust manifold 5 (including a first portion 51 and a second portion 52) is connected to a first turbine 7 (a normal exhaust gas turbine), which turbine drives a first compressor 9 for compressing intake air (outside air) 11. In this embodiment the compressed air is cooled via a so-called intercooler 13. The outlet of said intercooler is connected to air supply means 15 of the motor. The first portion 51 of the exhaust manifold 5 is connected to an exhaust gas outlet 19 via a second turbine 17 (the EGR turbine). Said second turbine drives a second compressor 21 (the EGR compressor), which second compressor supplies exhaust gas from the second portion of the exhaust manifold 5 in compressed condition to the air supply means 15 of the motor, which air supply means are connected to an inlet manifold 6. By connecting said second turbine and said second compressor each to one portion of the exhaust manifold, a balanced gas exchange in the exhaust portions of the motor is obtained.

If necessary the exhaust gas can be cooled by means of a cooling element 23 before being supplied to the second compressor, and/or, after being compressed, be cooled by means of a second cooling element 25 before being supplied to the air supply means 15 of the motor.

In order to be able to regulate the amount of exhaust gas to be recirculated to the motor, one or more control valves may be provided. The Figure shows a control valve 27 positioned before the second turbine 17 (the EGR turbine) and a control valve 29 positioned behind said second turbine. Furthermore the Figure shows a control valve 31 before the first cooling element 23 and a control valve 33 after the second cooling element 25. Instead of using a control valve 27 it is also possible to use a fixed restriction, for example.

When the motor is used in for example a bus or a lorry, which use a so-called motor brake, the control valves 31 and 27 may be closed during braking in order to ensure sufficient braking action.

The control of the various control valves by means of a control system (for example electronically, pneumatically, etc.) is known to those skilled in the art and need not be explained in more detail herein.

It will be apparent that various minor modifications to the system according to the invention are possible without departing from the essence of the invention.

Thus a V-8 engine, which is as standard fitted with two normal exhaust gas turbines, may be fitted with an EGR turbine as well, in order to reduce the emission of harmful substances. In that case the EGR turbine will be connected to the one exhaust manifold and the EGR compressor will be connected to the other exhaust manifold.

## Claims

1. A piston combustion engine having a system for recirculating exhaust gases, said system comprising an exhaust manifold, a turbine connected to said exhaust manifold, and an inlet system comprising a compressor, which compressor compresses outside air being supplied and delivers said air to air supply means as well as means for admixing exhaust gases, characterized in that said system includes a second turbine, which second turbine is connected to a first (portion of the) exhaust manifold, as well as a second compressor, which second compressor is connected to a second (portion of the) exhaust manifold with an inlet and to the air supply means with an outlet.

2. A piston combustion engine according to claim 1, characterized in that said second turbine is provided with at least one control valve.

3. A piston combustion engine according to claim 1 or 2, characterized in that said second compressor is provided with at least one control valve.

4. A piston combustion engine according to claim 1, 2 or 3, characterized in that the air passed through said second compressor is cooled before and/or after said second compressor.
